# EUROPEAN PATENT APPLICATION

(11) **EP 2 567 785 A1**
(43) Date of publication of application: **13.03.2013**
(21) Application number: 11180911.7
(22) Date of filing: 12.09.2011
(51) Int. Cl.: B25B 5/14, B23Q 3/06, B23P 6/00, B23Q 16/00, B23K 26/34, B22F 3/105, B22F 5/00, B22F 7/06, F23R 3/28, F23D 11/38

(54) **Method to machine a workpiece and arrangement comprising a support-structure and a workpiece**

(71) Applicant: Siemens Aktiengesellschaft, 80333 München (DE)
(72) Inventor: Andersson, Olov, 60385 Norrkoping (SE); Eriksson, Jonas, 61294 Finspong (SE); Graichen, Andreas, 60214 Norrköping (SE); Julardzija, Fikred, 602 41 Norrköping (SE); Stjärnström, Tobias, 58332 Finspong (SE)

(57) **Abstract**

The invention relates to a method to machine a workpiece (WP) and an arrangement therefore. To safe time and effort in a machining procedure involving conventional machining technology like chipping-technology and laser-sintering manufacturing steps said method comprises the following steps:
a) fixing the workpiece (WP) into a support-structure (SP),
b) machining the workpiece (WP) by means of chipping-technology while using the support-structure (SP) as a fixation device,
c) adding material (AM) to the workpiece (WP) by laser-sintering (LS) while using the support-structure (SP) as a fixation device.

## Description

The invention relates to a method to machine a workpiece comprising the following steps:
a) fixing the workpiece into a support-structure,
b) machining the workpiece by means of chipping technology
while using the support-structure as a fixation device.

Further the invention relates to an arrangement comprising a support-structure and a workpiece for carrying out the above method.

Latest development in the area of additive manufacturing technology lead to selective laser-sintering, which uses a high power laser to fuse small particles provided as a powder into a desired three-dimensional shape.

Typically a powder delivery system provides layers of powder to a workpiece, to which material is to be added. The layer-wise provided powder is scanned by the laser according to a pattern being defined by a three-dimensional model. Laser-sintering is especially beneficial with regard to the freedom of design since nearly every three-dimensional geometry can be machined. Further material can be added deliberately to existing workpieces, which are suitable for laser-sintering and are suitable for being processed in a laser-sintering-device. Processing with a laser-sintering-device currently goes along with several technical restrictions - especially a limited size of the workpiece and restrictions arising from the necessity to handle the workpiece together with the laser-sintering powder to be added to the workpiece. Somehow the laser-sintering powder has to be positioned, where it is to be added to the workpiece and supported primarily against gravity. A further disadvantage is that the workpiece has to be three-dimensionally aligned to a coordinate system of the laser-sintering apparatus, which requires time consuming manufacturing steps between conventional machining steps and the laser-sintering steps.

It is one object of the invention to safe time and effort in a machining procedure involving conventional machining technology like chipping-technology and laser-sintering manufacturing steps.

In accordance with the invention there is provided a method of the incipiently mentioned type comprising the following steps:
a) fixing the workpiece into a support-structure,
b) machining the workpiece by means of chipping technology while using the support-structure as a fixation device,
c) adding material to the workpiece by laser-sintering while using the support-structure as a fixation device.

The essential advantage according to the invention is the mutual support-structure for the conventional chipping technology manufacturing step and the subsequent lasers sintering manufacturing step of the workpiece. Both machines - the one for conventional manufacturing and the one for laser-sintering - allow easy alignment to a respective reference coordinate system of the machine by means of the identical support-structure of the workpiece. Time consuming alignment steps are saved and synergistically the accuracy of manufacturing is improved.

Another beneficial embodiment of the invention provides the support-structure not only as an alignment device but also as a stabilization of the workpiece. This is especially beneficial when machining complex workpieces, which might consist of several parts of different stiffness, which results in an overall flexible workpiece, which is not suitable for being - for example - put on a turning machine. Further these flexible workpieces might not be suitable for being reproductively being aligned identical. This feature of the method according to the invention makes the invention especially useful for repairing complex machine parts, like gas-turbine-burners, which are partly flexible due to bellows or partly mechanically weak design.

A further embodiment according to the invention provides means to allocate laser-sintering powder as a laser-sintering powder reservoir at an area where material is to be added to the workpiece by laser-sintering. These means are fixedly connected to the support-structure or belong to the support-structure itself. Basically these means support the laser-sintering powder against gravity and are therefore located below an area, where laser-sintering powder is to be added by laser-sintering to the workpiece with regard to the direction of gravity.

A further embodiment according to the invention provides a step of inserting a sealing device between the workpiece and the support-structure adjacent to the laser-sintering powder reservoir. This sealing device is useful to avoid a loss of laser-sintering powder, which might otherwise contaminate the workpiece in areas, where adding of material by laser-sintering is not intended.

The invention further relates to an arrangement comprising a support-structure and a workpiece for carrying out the method according to the invention, wherein the workpiece extends along a longitudinal axis, wherein the support-structure extends along said longitudinal axis from a first end to a second end, wherein said support-structure comprises at each of said first and second ends one end-flange comprising means to rigidly connect said workpiece to the respective flange, wherein at least one spacer element is rigidly connected to both flanges to provide a fixed spatial relation between the flanges.

The above mentioned attributes and other features and advantages of this invention and the manner of attaining them will become more apparent and the invention itself will be better understood by reference to the following description of the currently best known mode of carrying out the invention taken in conjunction with the accompanying drawings, wherein
- Figure 1:: shows schematically a depiction of an arrangement according to the invention as a longitudinal cross-section along the axis X,
- Figure 2:: shows a three-dimensional depiction of a first embodiment of an arrangement according to the invention,
- Figures 3 - 6:: respectively showing a three-dimensional depiction of an arrangement according to the invention respectively including specific elements to provide a reservoir for lasersintering-powder.

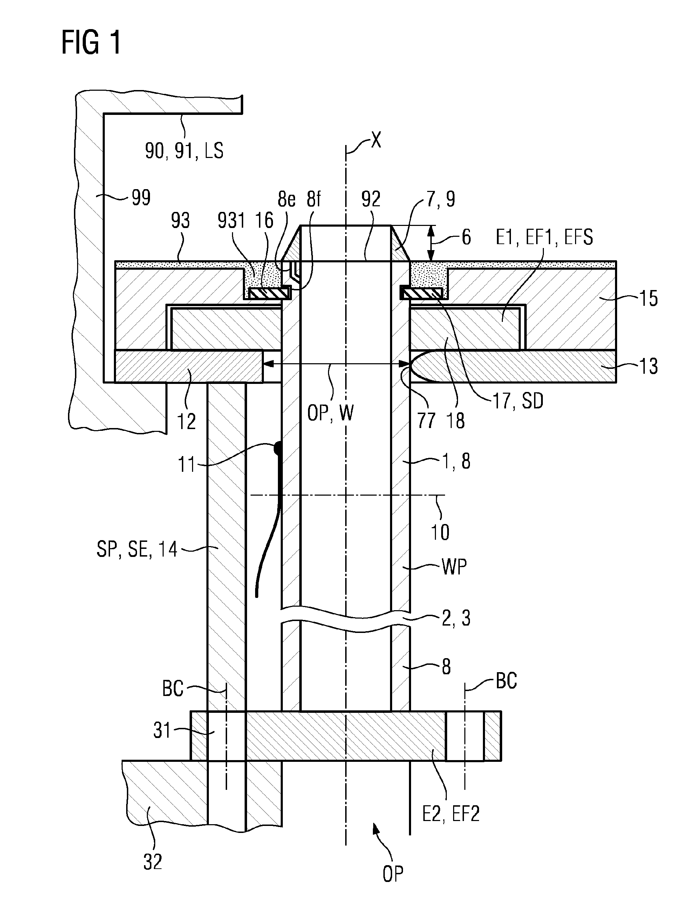

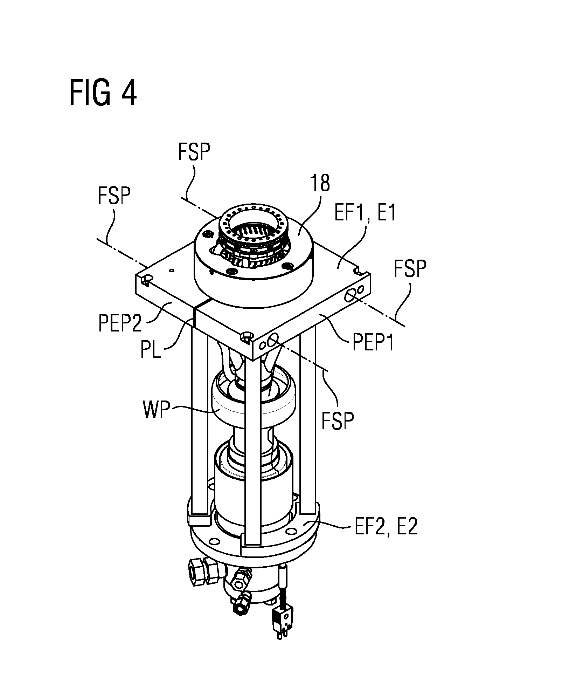

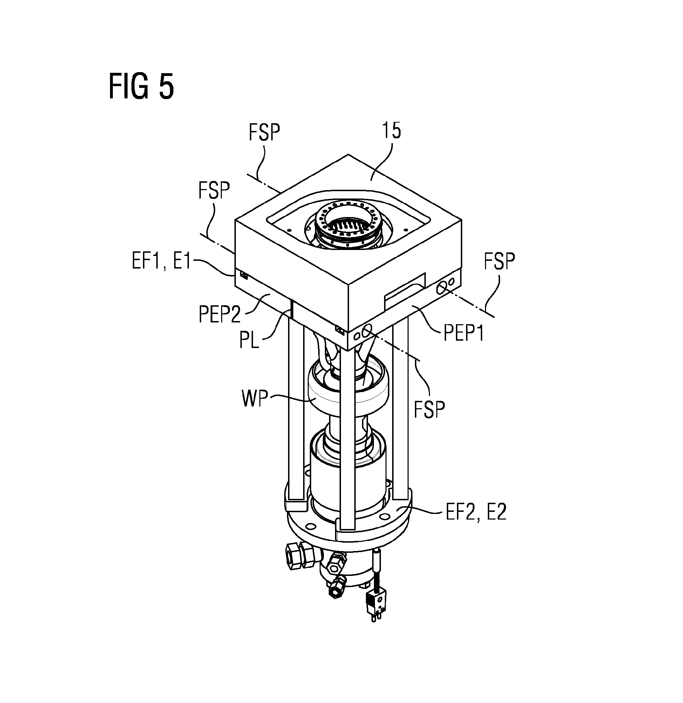

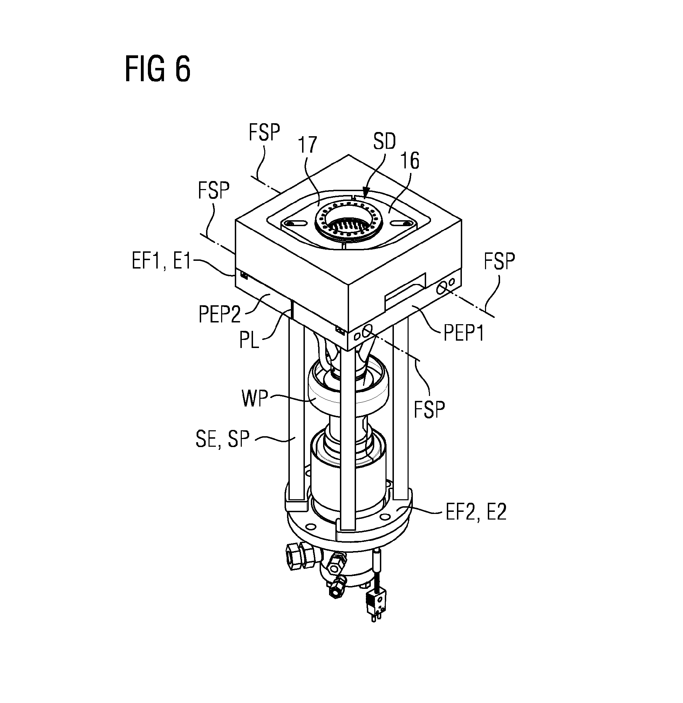

Figures 1 - 6 illustrate the method according to the invention and an arrangement according to the invention referring to an example of a repair of a gas-turbine-burner. Conventionally gas-turbine-burners were repaired by completely cutting off a comparatively large portion of the component body involving costly machining, re-welding and re-instrumentation steps. The below illustrated example according to the invention describes a more effective way of refurbishing a gas-turbine-burner saving time and money.

Figure 1 depicts schematically a gas-turbine-burner 1 comprising several parts generally refered to as component bodies 8. The gas-turbine-burner 1 is of delicate design comprising fine internal passages and channels 8e. The gas-turbine-burner 1 especially is provided with instrumentation 11 and not in detail depicted bellows 2 and otherwise partly mechanical week structures 3. A conventional repair was done by cutting the gas-turbine-burner 1 in the plane referred to by the indicated plane 10 and re-welding a new tip to the remaining part of the gas-turbine-burner 1 at said plane 10. The gas-turbine-burner 1 comprises a gas-turbine interface 32, by which the gas-turbine-burner 1 is securely connected positioned to the gas-turbine. The longitudinal axis X of the gas-turbine-burner 1 coincides with a longitudinal axis of a support-structure SP according to the invention and is therefore not otherwise referenced. In the wording of the invention the gas-turbine-burner 1 is also referred to more generally as a workpiece WP. The support-structure SP neutralizes the partly flexible and mechanical weak nature of the workpiece WP by compressing, centering and referencing the workpiece reproducibly. According to the method of the invention turning and laser-sintering can be done in one single setup without ever loosing the relative position of the interface between an area to be machined, the longitudinal axis X of the workpiece respectively the support-structure SP and a not further shown reference coordinate system of a laser-sintering-machine 91 respectively any other machine to be used.

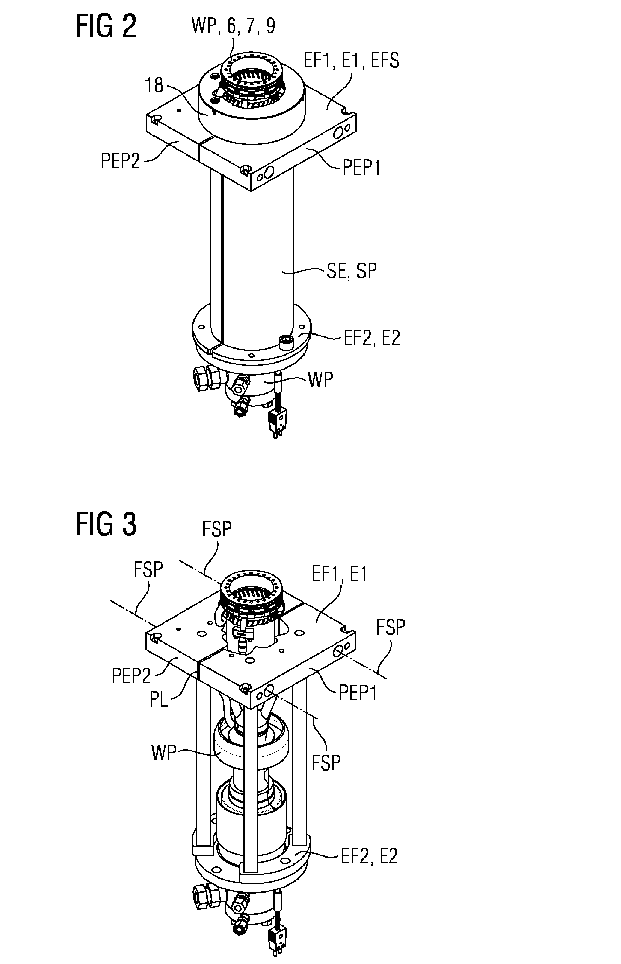

The support-structure SP extends from a first end El to a second end E2 respectively ending at a first end-flange EF1 and a second end-flange EF2. Between the first end-flange EF1 and the second end-flange EF2 a spacer-element SE respectively a mechanical rigid structure 14 is provided, which keeps a fixed spatial geometrical relation between said first end-flange EF1 and said second end-flange EF2. As shown in figure 2 and figures 3 - 6 the mechanically rigid structure 40 respectively the spacer-element SE can be of various design, as long as the required rigidity is ensured. The design shown in figures 3 - 6 is meant to be a more schematic depiction which shows also the otherwise hidden parts of the workpiece. A more preferred embodiment of the support-structure SP is the solid design (cylindrical spacer-element SE) shown in figure 2.

The first end-flange EF1 and the second end-flange EF2 can both be provided with openings in the area of the central axis X, through which the workpiece can be stuck through. This design enables the machining of relative long workpieces WP. According to the invention at least the first end-flange EF1 is provided as a stick-through-flange EFS comprising a through-opening OP for the workpiece WP. As depicted in figures 2 - 6 the through-opening OP can be split along a partition-line PL, separating two parts - namely a first part PEP1 and a second part PEP2 - of said first end-flange EF1 in such a way that a further separation of the two parts PEP1, PEP2 widens the through-opening OP and bringing said two parts PEP1, PEP2 closer to each other enables a fixation of the workpiece in the area of the first end-flange EF1 by means of contact points 77 provided at said parts PEP1, PEP2 between the first end-flange EF1 in the area of the through-opening OP and the workpiece WP. Only schematically indicated fasteners FSP enable a rigid fixation of the workpiece WP in the through-opening OP.

Said second end-flange EF2 is fixed to the gas-turbine interface 32 of the workpiece WP by a bolt-connection BC.

This above depicted step of fixation of the workpiece WP in the support-structure SP represents the first step of the method according to the invention. In a second step the arrangement of the support-structure SP and the workpiece is machined by way of chipping technology respectively by turning a tip portion 7 is machined away as turned-off-volume 6.

Subsequently a circular support-ring 18 is provided to the first end E1 of the support-structure SP and a hat-like-component 15 is provided to the first end E1 of the support-structure SP together with two sealing-lips 16, 17. Said hat-like-component 15 together with said sealing-lips 16, 17 define a laser sintering-powder-reservoir 931 to provide laser-sintering-powder 93 to the area, where said turned-off-volume 6 of the tip-portion 7 of the gas-turbine-burner 1 needs to be replaced. By way of laser-sintering LS the laser-sintering-powder 93 is added to the workpiece WP as added-material AM to rebuild said tip portion 7 onto the previously turned surface 92.

Said first end-flange EF1, said hat-like-component 15, said adjustable sealing-lips 16, 17 are arranged in a piston-groove 8f of said workpiece WP. Said workpiece WP and a working-chamber-wall 99 basically define a working-chamber 90 of said laser-sintering-machine 91, which can be provided with a protective atmosphere, for example consisting of an inert gas.

A more detailed example of a method according to the invention comprises the steps of:
- mounting the workpiece WP into said through-opening OP of said first end-flange EF1 by means of said contact points 77,
- securing the workpiece WP to said second end-flange EF2 preferably by using bolts
- inserting the support-structure SP and the workpiece WP as a rigidly connected unit into a turning-machine and
- turning-off the damaged tip portion 7, creating a suitable turned surface 92 for starting a laser-sintering-process,
- extracting the unit - consisting of said support-structure SP and said workpiece WP - from said turning-machine,
- establishing a laser-sintering powder reservoir 931 - here by mounting a component which is suitable to support the laser-sintering-powder LSP - here in particular said hat-like-component 15 - to the first end-flange EF1 and inserting a sealing-device SD - respectively adjustable sealing-lips 16, 17 - between the workpiece WP and the hat-like-component 15,
- providing laser-sintering-powder 93 into said laser-sintering-powder-reservoir 931,
- laser-sintering - here restoring the previously turned-off tip-portion 7 by the laser-sintering-process (generating a new tip-portion 9)
- cleaning - preferably vacuum cleaning - of the workpiece WP,
- extracting the unit consisting of workpiece WP and support-structure SP from the laser-sintering machine 91,
- extracting the workpiece WP from the support-structure SP.

## Claims

1. Method to machine a workpiece (WP) comprising the following steps:
a) fixing the workpiece (WP) into a support-structure (SP),
b) machining the workpiece (WP) by means of chipping-technology while using the support-structure (SP) as a fixation device,
c) adding material (AM) to the workpiece (WP) by laser-sintering (LS) while using the support-structure (SP) as a fixation device.

2. Method according to claim 1,
wherein during step b) and/or step c) the support-structure (SP) stabilizes the workpiece (WP).

3. Method according to claim 1 or 2,
wherein the support-structure (SP) comprises means to allocate laser-sintering-powder (LSP) as a laser-sintering-powder-reservoir (LSPR) at an area, where material (AM) is to be added by laser-sintering (LS).

4. Method according to claim 3,
wherein between step b) and step c) a sealing-device (SD) is provided between the workpiece (WP) and the support-structure (SP) adjacent to the laser-sintering powder reservoir (LSPR).

5. Arrangement comprising a support-structure (SP) and a workpiece (WP) in particular for carrying out the method according to at least one of the claims 1 to 4, wherein the workpiece (WP) extends along a longitudinal axis (X),
wherein the support-structure (SP) extends along said longitudinal axis (X) from a first end (E1) to a second end (E2),
wherein said support-structure (SP) comprises at each of said first end (E1) and second end (E2) one end-flange (EF1, EF2) - a first end-flange (EF1) and a second end-flange (EF2) - comprising means to rigidly connect said workpiece (WP) to the respective end-flange (EF1, EF2),
wherein at least one spacer-element (SE) is rigidly connected to the flanges (EF1, EF2) to provide a fixed spatial relation between the first end-flange (EF1) and the second end-flange (EF2).

6. Arrangement according to claim 5,
wherein at least one of said end-flanges (EF1, EF2) is made as a stick-through-flange (EFS) comprising an axial through-opening (OP) which is big enough to arrange the workpiece (WP) in the through-opening (OP) at least at a specific axial position of the workpiece (WP), wherein said first end-flange (EF1) with the through-opening (OP) can be divided into at least two parts (PEP1, PEP2) at a parting line (PL)
wherein said parting-line (PL) is running through the through-opening (OP) such that the widths (W) of the opening (OP) is adjustable by departing said at least two parts (PEP1, PEP2) of the first end-flange (EF1) further from each other.

7. Arrangement according to claim 6,
wherein said stick-through-flange (EFS) comprises at least one fastener (FSP) for fastening and/or adjusting the first part (PEP1) and the second part (PEP2) to each other.

8. Arrangement according to at least one of the previous claims,
wherein said stick-through-flange (EFS) is provided with a surface to directly or indirectly put laser-sintering-powder (LSP) onto the surface to be provided as material (AM) to be added to the workpiece (WP) by laser-sintering.
